# EUROPEAN PATENT SPECIFICATION

(11) **EP 0 579 741 B1**
(45) Date of publication and mention of the grant of the patent: **23.06.1999**
(21) Application number: 92910273.9
(22) Date of filing: 02.04.1992
(51) Int. Cl.: A01N 53/00, B65D 65/46, B65D 81/00

(54) **INSECTICIDAL COMPOSITION AND INSECTICIDAL UNITS**
INSEKTIZIDZUSAMMENSETZUNG UND -VERPACKUNGSEINHEITEN
COMPOSITION INSECTICIDE ET UNITES INSECTICIDES

(30) Priority: 02.04.1991 US 679290; 04.04.1991 US 680301; 11.06.1991 US 713684
(43) Date of publication of application: 26.01.1994
(73) Proprietor: RHONE-POULENC INC., Research Triangle Park, NC 27709 (US)
(72) Inventor: Fiard, Jean-Francois, F-75011 Paris (FR)
(74) Representative: Bentham, Stephen
(86) International application number: US9202718
(87) International publication number: WO9217385

(56) References cited:
- EP-A- 0 251 464
- WO-A-82/02647
- WO-A-89/12587
- DE-A- 3 343 092
- GB-A- 922 317
- GB-A- 2 058 569
- JP-A- 57 015 802
- US-A- 3 630 896
- US-A- 3 849 571
- US-A- 3 954 977
- US-A- 4 325 969
- US-A- 4 409 238
- US-A- 4 668 666
- US-A- 4 904 695
- US-A- 5 037 653
- US-A- 5 080 226

## Description

The invention relates to insecticidal compositions and to insecticidal units which are particularly suitable for sorting, packaging and transporting insecticidal concentrates of pyrethroids.

There are many difficulties in producing the optimum formulation of any given active ingredient in an insecticidal composition. The first requirement of any formulation is chemical stability. However, safety must come high on the list of important attributes. This can include worker exposure, safety for the environment, including spills, and container disposal issues. Most agricultural chemicals are diluted in water before spraying and need to be easily dispersible in water of varying hardness and pH. Formulations also need to be physically stable and this includes separation or breakdown of the product which affects any of the other properties.

Other properties desirable for formulations include the ability to withstand low temperatures without affecting loading or causing crystallization. The formulations must be useable without excess foaming, be compatible with other commonly used pesticides, and at the same time maintain the best biological activity. Bags have been also used for containing pesticidal compositions, but this renders the problem still more complicated due to the fact that the bags should be compatible with their contents.

US-A-5,080,226 (published after the priority dates claimed in the present application), discloses the containment of hazardous products, such as agricultural chemicals, in the form of a gel within a water soluble or water dispersible bag. The containment of pesticides in liquid form in a water soluble or water dispersible bag has also been disclosed in GB-A-922,317.

Pesticidal composition containing synthetic pyrethroids as active ingredient have been disclosed in for example US-A-4,668,666, US-A-4,904,695, WO-A-82/02647 and GB-A-2,058,569.

An object of the instant invention is to provide an insecticidal composition and insecticidal unit containing pyrethroid as active ingredient fulfilling most or all of the criteria discussed above.

The present invention provides an insecticidal unit comprising an insecticidal composition contained in a water soluble bag, the composition comprising a synthetic pyrethroid, a solvent, at least one gelling agent, at least one emulsifier and at least one antifoaming agent wherein the composition is in the form of a water dispersible gel comprising between 1 and 40% by weight of pyrethroid and having a phase difference phi between the controlled shear stress and the resulting shear strain such that tg(phi) is less than 1, a complex viscosity higher than 20 Pa.s at 10 rd/s and less than 1000 Pa.s at 1rd/s, a storage modulus from 1 to 10,000 Pa at 1rd/s and a spontaneity less than 20.

The invention further provides a water dispersible insecticidal composition suitable for containment in a water soluble bag which composition comprises a synthetic pyrethroid, a solvent, at least one gelling agent, at least one emulsifier and at least one antifoaming agent wherein the composition is in the form of a water dispersible gel comprising between 1 and 40% by weight of pyrethroid and having a phase difference phi between the controlled shear strain and such that tg(phi) is less than 1, a complex viscosity higher than 20 Pa.s at 10 rd/s and less than 1000 Pa.s at 1rd/s, a storage modulus from 1 to 10,000 Pa at 1rd/s and a spontaneity less than 20.

Preferably, the insecticidal composition contained in the insecticidal unit of the invention or the composition of the invention has a water dispersibility such that its spontaneity is less than 10.

Preferably the insecticidal composition contained in the insecticidal unit of the invention or the composition of the invention does not practically flow through pinholes and its tg(phi) is less than 0.5.

Preferably the insecticidal composition contained in the insecticidal unit or the composition of the invention has a storage modulus G' under a speed of oscillations of 1rd/s (1 radian per second) which is in the range of 1 to 10,000 Pascal, preferably 10 to 5000 Pascal.

The insecticidal compositions present in the insecticidal units of the invention and the compositions of the invention optionally contain at least one antioxidant and optionally contain an acidic agent.

Many kind of pyrethroids may be used in the invention, such as permethrin, cypermethrin, cyfluthrin, lambda cyhalothrin. The pyrethroids which are most preferred in the invention are deltamethrin or tralomethrin; in the compositions comprising one of these two pyrethroids, the antioxidant and the acidic agent are preferably included in the compositions of the invention.

Solvents which can be used in the invention are preferably liquid at room temperature. The solvent in the invention may be a single solvent or mixture of solvents. They may be, for example, selected in the group comprising liquid alkyl substituted aromatic hydrocarbons; ketones having from 6 to 12 carbon atoms in their molecule; butyrolactone; N-alkyl pyrrolidone, especially N-methyl-, N-octyl-, N-decyl- and N-cyclohexyl-pyrrolidone; saturated or unsaturated aliphatic acids having from 6 to 18 carbons atoms in their molecule; salicylic acid; anthranilic acid; alkyl or alkenyl esters of such aliphatic or of aromatic acids, such as benzoates, salicylates or anthranilates, especially esters having 1 to 8 carbon atoms in the alcoholic part of the ester molecule; the alkyl or aryl ethers; aliphatic or aromatic or heterocyclic substituted alcohols; lactones; and amides.

Preferred solvents are alkyl aromatic hydrocarbons having 10 to 16 carbon atoms; methyl esters of alkanoic and alkenoic acids having 8 to 18 carbons atoms; esters mixtures derivated from plant oils, generally methyl esters of saturated or unsaturated acids having 8 to 18 carbon atoms; methyl salicylate; N methyl pyrrolidone; tetrahydrofuran; butyrolactone; tetrahydrofurfuryl alcohol and esters thereof; and mixtures thereof.

Emulsifiers which can be used in the invention may be of any type, anionic or non-ionic or cationic or amphoteric surfactants. More preferably these emulsifiers are chosen so that their HLB (≈ hydrophilic lipophilic balance; this HLB is known in the art and tables are published giving the HLB for solvents which can be used) is close to the HLB of the solvent; preferably the difference is not greater than 2. The HLB of the emulsifier which is considered herein is the global HLB of all the surface active agent in the formulation. Among al these emulsifiers, the mixtures anionic + non ionic are advantageous.

Specific emulsifiers which are advantageous in the compositions of the invention are: dialkyl sulfosuccinates; alkylbenzene sulfonates salts, such as calcium dodecyl benzene sulfonate; ethoxylated tristyryl phenols, and sulfates and phosphates thereof; alkyl polyethoxy ether phosphates esters, either in acid or in salt form; ethoxylated fatty acids or alcohols; ethoxylated alkyl phenols or dialkyl phenols; ethoxylated castor oil; ethoxylated propoxylated block copolymers, ethoxylated propoxylated alkylphenol block copolymers; ethoxylated propoxylated tristyrylphenols; glycerol esters, especially esters of fatty acids; glycol esters, especially esters of fatty acids; lecithin and lecithin derivatives; sugar esters and other derivatives, as sorbitol, and sucrose or glucose esters or derivatives; sucroglycerides.

Gelling agents which can be used in the invention are generally solid and of low solubility in the liquid system (either the pyrethroid alone or the mixture pyrethroid + solvent) and able to form a homogeneous mixture as can be seen visually with the emulsifier of the insecticidal composition. Furthermore, the gelling agent is preferably also able to form a homogeneous, as can be seen visually, ternary mixture with the solvent and the emulsifier. It happens sometimes that the gelling agents are mixture of different compounds which might not be gelling agents alone.

Gelling agents which can be advantageously used are: polyacrylic derivatives such as polyacrylic salts, especially the alkali or ammonium salts; sodium dioctyl sulfosuccinate, optionally mixed with organic salts, such as sodium benzoate; silica; sodium acetate in combination with other compounds; urea; alumina; titanium dioxide; sugars; lignosulfonates; salts of alkyl arylsulfonates, such as sodium dodecyl benzene sulfonate; combinations of modified clay and propylene carbonate; hydrogenated castor oil; ethoxylated vegetable oil; tetramethyl decynediol; mixtures of dimethyl hexane diol and hexyne diol; and mixtures thereof. Some gelling agents might have both an emulsifying action and a gelling action such as ethoxylated/propoxylated alkyl phenol block copolymers; ethoxylated alkyl phenols and dialkyl phenols; ethoxylated fatty acids; ethoxylated fatty alcohols; ethoxylated propoxylated block copolymers; and mixtures thereof.

Antifoaming agents which can be used in the invention are compounds which are known to be antifoaming per se. Preferably they are a poly dialkylsiloxane as poly dimethyl siloxane or a hydrocarbon oil or tetramethydecynediol and dimethyl octynediol. They may have both antifoaming and surface-active properties, such as tetramethyldecynediol.

Antioxidants which can be used in the invention are generally of the phenolic type, such as alkyl phenols, alkyl gallates, ascorbic acid and tocopherol. More specifically, preferred antioxidants in the invention are butylated hydroxy toluene or anisole.

As already said, the insecticidal unit in the invention optionally comprise also an acidic agent. This agent is preferably selected in the group comprising aliphatic saturated or unsaturated acids, especially acetic acid; phosphoric acid or acidic salts; sulfuric acid; hydrochloric acid; acidic surfactant named above.

The gel material which is used in the invention is essentially a material which has a phase difference phi between the controlled shear stress and the resulting shear strain such that tg(phi) is less than or equal to 1, preferably less than or equal to 0.5 Tg(phi) is the tangent of the phi angle (or phase difference). The measurement of phi is made by means of a dynamic rheometer. Dynamic rheometers which are appropriate to measure phi are known and available commercially. They usually have a flat fixed plate and a rotating cone or plate, or a so-called couette measuring system. Other mechanical systems are also available. Generally the choice of one system or another is made according to the recommendations of the seller of the rheometer, and is adapted to the kind of compound, gel or liquid, which is tested. The particular choice of a specific type of rheometer is something well known by the man skilled in the art of rheology. A rotating plate over another plate or cone rotating over a plate are often more appropriate when a gel or a viscous liquid is tested. When two kinds of system for the rheometer are possible, similar values of phi are actually measured. The cone (or the plate or the couette) is caused to rotate by leans of a controlled speed motor; the rotation is a sinusoidal one, i.e., the strain and the angular displacement change as a sine function with time. Tg(phi) is equal to the ratio G''/G', wherein: G' is the storage modulus (represents the behavior of a perfect solid); G'' is the loss modulus (represents the behavior of a perfect liquid). G' and G'' are expressed in Pascal for a given rotational speed (radian per second).

G' and G'', and thus tg(phi), may depend on the amplitude of the oscillations (percentage of strain) of the rheometer; however, there is a generally a so-called viscoelastic plateau whereby the values G' and G'' of a gel do not depend substantially on the said amplitude; this means that in the conditions of the test under the viscoelastic plateau the structure of the gel is maintained and no destruction of the gel into a liquid happens. Of course, the measurement of G' and G'' of a gel is made under the conditions of this viscoelastic plateau, just because it corresponds to the normal gel structure which is precisely what is tested.

G' and G'', and thus tg(phi), may also depend on the speed of the oscillations (time to reach the chosen percentage of strain; expressed as radian per second) of the rheometer; however, when the gel is well structured there is no so much variation from one speed to another. In order to have a reasonable measurement of the properties of a gel, it is generally preferred to operate in conditions whereby the gel is not too much stressed, that is to say at speed such as 1 rd/s. Of course, measurements at higher speed may also be made.

The complex viscosity is a parameter known to the skilled artisan and is defined as 1/W multiplied by the square root of (G'² + G''²) wherein W is the frequence of the stress and G' and G'' have been defined hereinabove.

The insecticidal unit of the instant invention comprise an insecticidal composition in a bag. This bag is generally made of a polymeric material in form of a film, and this film constitutes the wall of the bag. Polymeric material which can be used in the invention are poiyvinylalcohol; cellulosic materials such as methyl or ethyl cellulose; poly alkylene oxides. A preferred material is polyvinylalcohol, which is advantageously totally or partially hydrolyzed or alcoholized polyvinyl acetate. The hydrolysis or alcoholysis rate of polyvinyl acetate in the invention is generally between 70 and 90%. All these materials should be cold water soluble (cold means, here, less than 35°C).

As already said, the insecticidal unit comprises an insecticidal composition contained in a water soluble bag, the said composition comprising a synthetic pyrethroid and a solvent and at least one gelling agent and at last one emulsifier and at least one antifoaming agent and optionally at least one antioxidant and an acidic agent.

The volume of the bag is generally comprised between 40 ml and 5 liters, preferably between 0.1 and 3 liters.

The amount of pyrethroid in the insecticidal composition of the invention is comprised between 1 and 40% of the total insecticidal composition contained in the bag, (in the present specification, unless otherwise specified, the percentage are w/w); for deltamethrin and tralomethrin an amount of 1 to 20% is preferred.

The amount of emulsifier in the insecticidal composition of the invention is generally comprised between 2 and 30% of the total insecticidal composition contained in the bag, preferably between 4 and 20%.

The amount of gelling agent in the insecticidal composition of the invention is generally comprised between 0.5 and 20% of the total insecticidal composition contained in the bag, preferably between 0.8 and 10%.

The amount of antifoaming agent in the insecticidal composition of the invention is generally comprised between 0.05 and 5% of the total insecticidal composition contained in the bag, preferably between 0.1 and 0.5%.

The amount of antioxidant in the insecticidal composition of the invention is generally comprised between 0.01 and 1% of the total insecticidal composition contained in the bag, preferably between 0.5 and 0.2%.

The amount of acidic agent in the insecticidal composition of the invention is generally comprised between 0.01 and 1% of the total insecticidal composition contained in the bag, preferably between 0.05 and 0.5%.

Particular embodiments of the insecticidal unit of the invention are listed below. It will be appreciated that the compositions of the invention may equally comprise the specific composition features illustrated in these embodiments.

A particular embodiment of the present invention is an insecticidal unit according to the invention wherein the solvent is a liquid at room temperature selected in the group comprising aromatic, optionally alkyl substituted, hydrocarbons; ketones having from 6 to 12 carbon atoms in their molecule; butyrolactone; N-methyl pyrrolidone; alkanoic acids having from 6 to 12 carbon atoms in their molecule; aliphatic or aromatic aldehyde having from 6 to 24 carbon atoms in their molecule; salicylic acid; anthranilic acid; alkyl or alkenyl esters of such alkanoic or salicylic or anthranilic acids having 1 to 5 carbon atoms in the alcoholic part of the ester molecule; alkyl or aryl ethers; aliphatic or aromatic alcohols; lactones; and amides.

Another particular embodiment of the present invention is an insecticidal unit according to the invention wherein the gelling agent is a solid which is insoluble in the solvent and miscible with the emulsifier of the insecticidal composition.

Another particular embodiment of the present invention is an insecticidal unit according to the invention wherein the gelling agent is a solid which is insoluble in the solvent and miscible with the emulsifier of the insecticidal composition and able to form a homogeneous ternary mixture with the solvent and the emulsifier.

Another particular embodiment of the present invention is an insecticidal unit according to the invention wherein the insecticidal composition is in the form of an emulsion wherein the average size of the droplets is less than 10 microns.

Another particular embodiment of the present invention is an insecticidal unit according to the invention wherein the insecticidal composition is in the form of an emulsion wherein the average size of the droplets is less than 3 microns.

Another particular embodiment of the present invention is an insecticidal unit according to the invention wherein the emulsifier or the emulsifiers are anionic or non-ionic or cationic or amphoteric surfactants where HLB matches said system and emulsion of less than 10 microns are observed, preferably where emulsions of less than 3 microns are observed.

Another particular embodiment of the present invention is an insecticidal unit according to the invention wherein the antioxidant is of the phenolic type.

Another particular embodiment of the present invention is an insecticidal unit according to the invention wherein the antioxidant is selected in the group consisting of butylated hydroxytoluene and butylated hydroxyanisol.

Another particular embodiment of the present invention is an insecticidal unit according to the invention previous embodiments wherein the acidic agent is selected in the group comprising acetic acid, phosphoric acid, sulfuric acid, hydrochloric acid, phosphonic surfactants.

### EXAMPLE 1

A first composition is made by stirring a mixture of

| | |
|---|---|
| Deltamethrin | 2.5% |
| Alkyl aromatic hydrocarbon (flash point is 93°C) | 84.2% |
| Sodium lauryl sulfate (gelling) | 3.3% |
| sodium dioctyl sulfosuccinate + sodium benzoate (gelling and emulsifying agent) | 2% |
| ethoxylated propoxylated alkyl benzene (gelling and emulsifying agent) | 3.5% |
| calcium dodecyl benzene sulfonate (emulsifying agent) | 3.5% |
| dimethyl polysiloxane (antifoaming agent) | 0.5% |
| ethoxylated alkyl phosphate ester (acid and emulsifying agent) | 0.5% |

### EXAMPLE 2

A second composition is made by stirring a mixture of

| | |
|---|---|
| Deltamethrin | 2.5% |
| Alkyl aromatic hydrocarbon (flash point is 93°C) | 84.2% |
| Sodium lauryl sulfate (gelling) | 3.3% |
| sodium dioctyl sulfosuccinate + sodium benzoate (gelling and emulsifying agent) | 2% |
| ethoxylated propoxylated alkyl benzene (gelling and emulsifying agent) | 3.5% |
| calcium dodecyl benzene sulfonate (emulsifying agent) | 3.5% |
| dimethyl polysiloxane (antifoaming agent) | 0.5% |
| ethoxylated alkyl phosphate ester (acid and emulsifying agent) | 0.5% |

The compositions hereabove were filled in bag made of polyvinylalcohol. The volume of the composition was 100 ml, and the volume of the bag was 150 ml. The bags were closed by heating sealing.

Following tests have been performed:
a) The characteristics of the gels were measured as previously indicated.
   The insecticidal units of the instant invention are better when the compositions contained therein have the lowest possible tangent: this tangent is correlated with non flowing properties through pinholes at rest.
b) The spontaneity is assessed according to the following method: A mixture of 1 ml gel with 99 ml water are put into a 150 ml glass tube (diameter 22mm) which is stoppered and inverted by 180 degrees (upside down). The number of inversions required to completely disperse the gel is called the spontaneity.
   The insecticidal units of the instant invention are better when the compositions contained therein have the lowest possible spontaneity: this spontaneity is correlated with water dispersibility.
c) Stability of gels at different temperatures:
   The properties of gels in a bag have been measured after (independent tests)
   two weeks at +54°C,
   two weeks at +4°C
   one cycle of one day at 5°C followed by one day at +45°C

Following results have been obtained:

| Formulation of Example: | tg(phi) | Spontaneity | G' Storage Modulus |
|---|---|---|---|
| 1 | 0.1 (1 rd/s) | less than 4 | 152 at 1 rd/s (171 at 10 rd/s) |
| 2 | 0.16 (1 rd/s) | less than 4 | 544 at 1 rd/s (633 at 10 rds) |

### Effect of temperature:

Syneresis was only 2% at 54°C but the properties of the gel did not substantially vary. The Compositions were completely stable for the other tests.

## Claims

1. An insecticidal unit comprising an insecticidal composition contained in a water soluble bag, the composition comprising a synthetic pyrethroid, a solvent, at least one gelling agent, at least one emulsifier and at least one antifoaming agent wherein the composition is in the form of a water dispersible gel comprising between 1 and 40% by weight of pyrethroid and having a phase difference phi between the controlled shear stress and the resulting shear strain such that tg (phi) is less than 1, a complex viscosity higher than 20 Pa.s at 10 rd/s and less than 1000 Pa.s at 1 rd/s, a storage modulus from 1 to 10,000 Pa at 1 rd/s and a spontaneity less than 20.

2. An insecticidal unit according to claim 1 wherein the insecticidal composition comprises, as pyrethroid, deltamethrin or tralomethrin.

3. An insecticidal unit according to claim 1 or 2 wherein the insecticidal composition has a value of tg (phi) less than 0.5.

4. An insecticidal unit according to claims 1, 2 or 3 wherein the insecticidal composition has a storage modulus from 10 to 5,000 Pa at 1 rd/s.

5. An insecticidal unit according to any of the preceding claims wherein the insecticidal composition has a spontaneity less than 10.

6. An insecticidal unit according to any one of the preceding claims wherein the water soluble bag is made of polyvinylalcohol film.

7. An insecticidal unit according to claim 6 wherein the water soluble bag is made of partially hydrolysed polyvinyl acetate having an hydrolysis rate between 70 and 90%.

8. An insecticidal unit according to any one of the preceding claims wherein the solvent is a liquid at room temperature selected from aromatic, optionally alkyl substituted, hydrocarbons; ketones containing from 6 to 12 carbon atoms; butyrolactone; N-methyl pyrrolidone; alkanoic acids containing 6 to 12 carbon atoms; aliphatic or aromatic aldehydes containing from 6 to 24 carbon atoms; salicylic acid; anthranilic acid; alkyl or alkenyl esters of such alkanoic or salicylic or anthranilic acids containing 1 to 5 carbon atoms in the alcoholic group; alkyl and aryl ethers; aliphatic and aromatic alcohols; and amides.

9. An insecticidal unit according to any one of the preceding claims wherein the gelling agent is a solid which is insoluble in the solvent and miscible with the emulsifier of the insecticidal composition.

10. An insecticidal unit according to claim 9 wherein the gelling agent is able to form a homogenous ternary mixture with the solvent and the emulsifier.

11. An insecticidal unit according to any one of the preceding claims wherein the insecticidal composition is in the form of an emulsion wherein the average size of the droplets is less than 10 microns.

12. An insecticidal unit according to claim 11 wherein the average size of the droplets is less than 3 microns.

13. An insecticidal unit according to claim 11 or 12 wherein the insecticidal composition comprises as emulsifier anionic, non-ionic, cationic and/or amphoteric surfactant having a hydrophilic-lipophilic balance (HLB) within 2 of the HLB of the solvent.

14. An insecticidal unit according to any one of the preceding claims wherein the insecticidal composition comprises an antioxidant or an acidic agent.

15. An insecticidal unit according to claim 14 wherein the antioxidant is a phenolic antioxidant.

16. An insecticidal unit according to claim 15 wherein the antioxidant is butylated hydroxytoluene or butylated hydroxyanisol.

17. An insecticidal unit according to any one of claims 14 to 16 wherein the insecticidal composition comprises an acidic agent which is acetic acid, phosphoric acid, sulfuric acid or hydrochloric acid or a phosphonic surfactant.

18. A water-dispersible insecticidal composition suitable for containment in a water soluble bag, which composition comprises a synthetic pyrethroid, a solvent, at least one gelling agent, at least one emulsifier and at least one antifoaming agent wherein the composition is in the form of a water dispersible gel comprising between 1 and 40% by weight of pyrethoid and having a phase difference phi between the controlled shear strain such that tg (phi) is less than 1, a complex viscosity higher than 20 Pa.s at 10 rd/s and less than 1000 Pa.s at 1 rd/s, a storage modulus from 1 to 10,000 Pa at 1 rd/s and a spontaneity less than 20.

19. A composition according to claim 18 comprising, as pyrethroid, deltamethrin or tralomethrin.

20. A composition according to claim 18 or 19 having a value of tg (phi) less than 0.5.

21. A composition according to any one of claims 18 to 20 having a storage modulus from 10 to 5,000 Pa at 1 rd/s.

22. A composition according to any one of claims 18 to 21 having a spontaneity less than 10.

23. A composition according to any one of claims 18 to 22 wherein the solvent is a liquid at room temperature selected from aromatic, optionally alkyl substituted, hydrocarbons; ketones containing from 6 to 12 carbon atoms; butyrolactone; N-methyl pyrrolidone; alkanoic acids containing 6 to 12 carbon atoms; aliphatic or aromatic aldehydes containing from 6 to 24 carbon atoms; salicylic acid; anthranilic acid; alkyl or alkenyl esters of such alkanoic or salicylic or anthranilic acids containing 1 to 5 carbon atoms in the alcoholic group; alkyl and aryl ethers; aliphatic and aromatic alcohols; and amides.

24. A composition to any one of claim 18 to 23 wherein the gelling agent is a solid which is insoluble in the solvent and miscible with the emulsifier of the insecticidal composition.

25. A composition to claim 24 wherein the gelling agent is able to form a homogeneous ternary mixture with the solvent and the emulsifier.

26. A composition according to any of claims 18 to 25 which is in the form of an emulsion wherein the average size of the droplets is less than 10 microns.

27. A composition according to claim 26 wherein the average size of the droplets is less than 3 microns.

28. A composition according to claim 26 or 27 which comprises as emulsifier anionic, non-ionic, cationic and/or amphoteric surfactant having a hydrophilic lipophilic balance (HLB) within 2 of the HLB of the solvent.

29. A composition according to any one of claims 18 to 28 which comprises a phenolic antioxidant.

30. A composition according to claim 29 wherein the antioxidant is butylated hydroxytoluene or butylated hydroxyanisol.

31. A composition according to any one of claims 18 to 30 which comprises an acidic agent which is acetic acid, phosphoric acid, sulfuric acid or hydrochloric acid or a phosphonic surfactant.

## Patentansprüche

1. Insektizide Einheit, umfassend ein insektizides Mittel, das in einem in Wasser löslichen Beutel enthalten ist, wobei das Mittel umfaßt ein synthetisches Pyrethroid, ein Lösungsmittel, mindestens ein gelbildendes Mittel, mindestens ein Emulgiermittel und mindestens ein Antischaummittel, wobei das Mittel in Form eines in Wasser dispergierbaren Gels vorliegt, umfassend zwischen 1 und 40 Gew.-% Pyrethroid und mit einer Phasendifferenz ϕ zwischen der kontrollierten Scherspannung und der daraus resultierenden Schiebung, so daß tg(ϕ) kleiner als 1 ist, einer komplexen Viskosität von mehr als 20 Pa·s bei 10 rd/s und weniger als 1000 Pa·s bei 1 rd/s, einem Lagermodul von 1 bis 10 000 Pa bei 1 rd/s und einer Spontaneität von weniger als 20.

2. Insektizide Einheit nach Anspruch 1, wobei das insektizide Mittel als Pyrethroid Deltamethrin oder Tralomethrin umfaßt.

3. Insektizide Einheit nach Anspruch 1 oder 2, wobei das insektizide Mittel einen tg(ϕ)-Wert von weniger als 0,5 hat.

4. Insektizide Einheit nach Anspruch 1, 2 oder 3, wobei das insektizide Mittel einen Lagerungsmodul von 10 bis 5 000 Pa bei 1 rd/s hat.

5. Insektizide Einheit nach einem der vorangehenden Ansprüche, wobei das insektizide Mittel eine Spontaneität von weniger als 10 hat.

6. Insektizide Einheit nach einem der vorangehenden Ansprüche, wobei der in Wasser lösliche Beutel aus einer Polyvinylalkohol-Folie hergestellt ist.

7. Insektizide Einheit nach Anspruch 6, wobei der wasserlösliche Beutel aus partiell hydrolysiertem Polyvinylacetat mit einer Hydrolyserate zwischen 70 und 90 % hergestellt ist.

8. Insektizide Einheit nach einem der vorangehenden Ansprüche, wobei das Lösungsmittel bei Raumtemperatur eine Flüssigkeit ist, ausgewählt aus aromatischen, gegebenenfalls alkylsubstituierten, Kohlenwasserstoffen, Ketonen mit 6 bis 12 Kohlenstoffatomen, Butyrolacton, N-Methylpyrrolidon, Alkansäuren mit 6 bis 12 Kohlenstoffatomen, aliphatischen oder aromatischen Aldehyden mit 6 bis 24 Kohlenstoffatomen, Salicylsäure, Anthranilsäure, Alkyl- oder Alkenylestern derartiger Alkansäuren oder Salicyl- oder Anthranilsäuren mit 1 bis 5 Kohlenstoffatomen in der alkoholischen Gruppe, Alkyl- und Arylethern, aliphatischen und aromatischen Alkoholen und Amiden.

9. Insektizide Einheit nach einem der vorangehenden Ansprüche, wobei das gelbildende Mittel ein Feststoff ist, der in dem Lösungsmittel unlöslich und mit dem Emulgiermittel des insektiziden Mittels mischbar ist.

10. Insektizide Einheit nach Anspruch 9, wobei das gelbildende Mittel ein homogenes ternäres Gemisch mit dem Lösungsmittel und dem Emulgiermittel bilden kann.

11. Insektizide Einheit nach einem der vorangehenden Ansprüche, wobei das insektizide Mittel in Form einer Emulsion vorliegt, bei der die mittlere Größe der Tröpfchen kleiner als 10 µm ist.

12. Insektizide Einheit nach Anspruch 11, wobei die mittlere Größe der Tröpfchen kleiner als 3 µm ist.

13. Insektizide Einheit nach Anspruch 11 oder 12, wobei das insektizide Mittel als Emulgiermittel ein anionisches, nicht ionisches, kationisches und/oder amphotäres grenzflächenaktives Mittel mit einem hydrophilen/lipophilen Gleichgewicht (HLB) innerhalb von 2, bezogen auf das HLB des Lösungsmittels, ist.

14. Insektizide Einheit nach einem der vorangehenden Ansprüche, wobei das insektizide Mittel ein Antioxidans oder ein saures Mittel umfaßt.

15. Insektizide Einheit nach Anspruch 14, wobei das Antioxidans ein phenolisches Antioxidans ist.

16. Insektizide Einheit nach Anspruch 15, wobei das Antioxidans butyliertes Hydroxytoluol oder butyliertes Hydroxyanisol ist.

17. Insektizide Einheit nach einem der Ansprüche 14 bis 16, wobei das insektizide Mittel ein saures Mittel umfaßt, das Essigsäure, Phosphorsäure, Schwefelsäure oder Salzsäure oder ein Phosphonsäure-grenzflächenaktives Mittel ist.

18. In Wasser dispergierbares insektizides Mittel, das geeignet ist, um in einem in Wasser löslichen Beutel enthalten zu sein, wobei das Mittel umfaßt ein synthetisches Pyrethroid, ein Lösungsmittel, mindestens ein gelbildendes Mittel, mindestens einen Emulgator und mindestens ein Antischaummittel, wobei das Mittel in Form eines in Wasser dispergierbaren Gels vorliegt, umfassend zwischen 1 und 40 Gew.-% Pyrethroid und mit einer Phasendifferenz ϕ zwischen der kontrollierten Scherspannung und der daraus resultierenden Schiebung, so daß tg(ϕ) kleiner als 1 ist, einer komplexen Viskosität von mehr als 20 Pa·s bei 10 rd/s und weniger als 1000 Pa·s bei 1 rd/s, einem Lagermodul von 1 bis 10 000 Pa bei 1 rd/s und einer Spontaneität von weniger als 20.

19. Mittel nach Anspruch 18, wobei das insektizide Mittel als Pyrethroid Deltamethrin oder Tralomethrin umfaßt.

20. Mittel nach Anspruch 18 oder 19, wobei das insektizide Mittel einen tg(ϕ)-Wert von weniger als 0,5 hat.

21. Mittel nach Anspruch 18 bis 20, wobei das insektizide Mittel einen Lagerungsmodul von 10 bis 5 000 Pa bei 1 rd/s hat.

22. Mittel nach einem der Ansprüche 18 bis 21, wobei das insektizide Mittel eine Spontaneität von weniger als 10 hat.

23. Mittel nach einem der Ansprüche 18 bis 22, wobei das Lösungsmittel bei Raumtemperatur eine Flüssigkeit ist, ausgewählt aus aromatischen, gegebenenfalls alkylsubstituierten, Kohlenwasserstoffen, Ketonen mit 6 bis 12 Kohlenstoffatomen, Butyrolacton, N-Methylpyrrolidon, Alkansäuren mit 6 bis 12 Kohlenstoffatomen, aliphatischen oder aromatischen Aldehyden mit 6 bis 24 Kohlenstoffatomen, Salicylsäure, Anthranilsäure, Alkyl- oder Alkenylestern derartiger Alkansäuren oder Salicyl- oder Anthranilsäuren mit 1 bis 5 Kohlenstoffatomen in der alkoholischen Gruppe, Alkyl- und Arylethern, aliphatischen und aromatischen Alkoholen und Amiden.

24. Mittel nach einem der Ansprüche 18 bis 23, wobei das gelbildende Mittel ein Feststoff ist, der in dem Lösungsmittel unlöslich und mit dem Emulgiermittel des insektiziden Mittels mischbar ist.

25. Mittel nach Anspruch 24, wobei das gelbildende Mittel ein homogenes ternäres Gemisch mit dem Lösungsmittel und dem Emulgiermittel bilden kann.

26. Mittel nach einem der Ansprüche 18 bis 25, wobei das insektizide Mittel in Form einer Emulsion vorliegt, bei der die mittlere Größe der Tröpfchen kleiner als 10 µm ist.

27. Mittel nach Anspruch 26, wobei die mittlere Größe der Tröpfchen kleiner als 3 µm ist.

28. Mittel nach einem der Ansprüche 26 oder 27, wobei das insektizide Mittel als Emulgiermittel ein anionisches, nicht ionisches, kationisches und/oder amphotäres grenzflächenaktives Mittel mit einem hydrophilen/lipophilen Gleichgewicht (HLB) innerhalb von 2, bezogen auf das HLB des Lösungsmittels, ist.

29. Mittel nach einem der Ansprüche 18 bis 28, umfassend ein phenolisches Antioxidans.

30. Mittel nach Anspruch 29, wobei das Antioxidans butyliertes Hydroxytoluol oder butyliertes Hydroxyanisol ist.

31. Mittel nach einem der Ansprüche 18 bis 30, umfassend ein saures Mittel, das Essigsäure, Phosphorsäure, Schwefelsäure oder Salzsäure oder ein Phosphonsäure-grenzflächenaktives Mittel ist.

## Revendications

1. Unité insecticide comprenant une composition insecticide logée dans un sac hydrosoluble, composition qui comprend un pyréthroïde synthétique, un solvant, au moins un agent gélifiant, au moins un émulsifiant et au moins un agent anti-mousse, dans laquelle la composition est sous forme d'un gel dispersable dans l'eau comprenant 1 à 40 % en poids d'un pyréthroïde et ayant une différence de phase phi entre la tension de cisaillement contrôlée et la, déformation de cisaillement résultante telle que tg (phi) soit inférieure à 1, une viscosité complexe supérieure à 20 Pa.s à 10 rd/s et inférieure à 1000 Pa.s à 10 rd/s, un module de stockage de 1 à 10 000 Pa à 1 rd/s et une spontanéité inférieure à 20.

2. Unité insecticide suivant la revendication 1, dans laquelle la composition insecticide comprend, comme pyréthroïde, de la deltaméthrine ou de la tralométhrine.

3. Unité insecticide suivant la revendication 1 ou 2, dans laquelle la composition insecticide a une valeur de tg (phi) inférieure à 0,5.

4. Unité insecticide suivant la revendication 1, 2 ou 3, dans laquelle la composition insecticide a un module de stockage compris dans l'intervalle de 10 à 5000 Pa à 1 rd/s.

5. Unité insecticide suivant l'une quelconque des revendications précédentes, dans laquelle la composition insecticide a une spontanéité inférieure à 10.

6. Unité insecticide suivant l'une quelconque des revendications précédentes, dans laquelle le sac hydrosoluble est constitué d'un film de polymère d'alcool vinylique.

7. Unité insecticide suivant la revendication 6, dans laquelle le sac hydrosoluble est constitué d'un polymère d'acétate de vinyle partiellement hydrolysé, ayant un taux d'hydrolyse de 70 à 90 %.

8. Unité insecticide suivant l'une quelconque des revendications précédentes, dans laquelle le solvant est un liquide à température ambiante, choisi entre des hydrocarbures aromatiques, facultativement à substituants alkyle ; des cétones contenant 6 à 12 atomes de carbone ; la butyrolactone ; la N-méthylpyrrolidone ; des acides alcanoïques contenant 6 à 12 atomes de carbone ; des aldéhydes aliphatiques ou aromatiques contenant 6 à 24 atomes de carbone ; l'acide salicylique ; l'acide anthranilique ; des esters alkyliques ou alcényliques de ces acides alcanoïques, de l'acide salicylique ou de l'acide anthranilique, contenant 1 à 5 atomes de carbone dans le groupe alcoolique ; des éthers alkyliques et aryliques ; des alcools aliphatiques et aromatiques ; et des amides.

9. Unité insecticide suivant l'une quelconque des revendications précédentes, dans laquelle l'agent gélifiant est un agent solide qui est insoluble dans le solvant et miscible à l'émulsifiant de la composition insecticide.

10. Unité insecticide suivant la revendication 9, dans laquelle l'agent gélifiant est capable de former un mélange ternaire homogêne avec le solvant et l'émulsifiant.

11. Unité insecticide suivant l'une quelconque des revendications précédentes, dans laquelle la composition insecticide est sous forme d'une émulsion dans laquelle le diamètre moyen des gouttelettes est inférieur à 10 micromètres.

12. Unité insecticide suivant la revendication 11, dans laquelle le diamètre moyen des gouttelettes est inférieur à 3 micromètres.

13. Unité insecticide suivant la revendication 11 ou 12, dans laquelle la composition insecticide comprend un émulsifiant consistant en un surfactant anionique, non ionique, cationique et/ou amphotère présentant un équilibre hydrophile-lipophile (HLB) dans les limites de 2 unités de la valeur de HLB du solvant.

14. Unité insecticide suivant l'une quelconque des revendications précédentes, dans laquelle la composition insecticide comprend un antioxydant ou un agent acide.

15. Unité insecticide suivant la revendication 14, dans laquelle l'antioxydant est un antioxydant phénolique.

16. Unité insecticide suivant la revendication 15, dans laquelle l'antioxydant consiste en butylhydroxytoluène ou butylhydroxyanisole.

17. Unité insecticide suivant l'une quelconque des revendications 14 à 16, dans laquelle la composition insecticide comprend un agent acide qui consiste en acide acétique, acide phosphorique, acide sulfurique ou acide chlorhydrique, ou un surfactant phosphonique.

18. Composition insecticide dispersable dans l'eau convenable pour le conditionnement dans un sac hydrosoluble, composition qui comprend un pyréthroïde synthétique, un solvant et au moins un agent gélifiant, au moins un émulsifiant et au moins un agent anti-mousse, ladite composition étant sous forme d'un gel dispersable dans l'eau comprenant 1 à 40 % en poids d'un pyréthroïde et présentant une différence de phase phi entre la tension de cisaillement contrôlée et la déformation de cisaillement résultante telle que tg (phi) soit inférieure à 1, une viscosité complexe inférieure à 20 Pa.s à 10 rd/s et inférieure à 1000 Pa.s à 1 rd/s, un module de stockage compris dans l'intervalle de 1 à 10 000 Pa à 1 rd/s et une spontanéité inférieure à 20.

19. Composition suivant la revendication 18, comprenant, comme pyréthroïde, de la deltaméthrine ou la tralométhrine.

20. Composition suivant la revendication 18 ou 19, ayant une valeur de tg (phi) inférieure à 0,5.

21. Composition suivant l'une quelconque des revendications 18 à 20, ayant un module de stockage compris dans l'intervalle de 10 à 5000 Pa à 1 rd/s.

22. Composition suivant l'une quelconque des revendications 18 à 21, ayant une spontanéité inférieure à 10.

23. Composition suivant l'une quelconque des revendications 18 à 22, dans laquelle le solvant est un liquide à température ambiante, choisi entre des hydrocarbures aromatiques, facultativement à substituants alkyle ; des cétones contenant 6 à 12 atomes de carbone ; la butyrolactone ; la N-méthylpyrrolidone ; des acides alcanoïques contenant 6 à 12 atomes de carbone ; des aldéhydes aliphatiques ou aromatiques contenant 6 à 24 atomes de carbone ; l'acide salicylique ; l'acide anthranilique ; des esters alkyliques ou alcényliques de ces acides alcanoïques, de l'acide salicylique ou de l'acide anthranilique, contenant 1 à 5 atomes de carbone dans le groupe alcoolique ; des éthers alkyliques et aryliques ; des alcools aliphatiques et aromatiques ; et des amides.

24. Composition suivant l'une quelconque des revendications 18 à 23, dans laquelle l'agent gélifiant est un agent solide qui est insoluble dans le solvant et miscible à l'émulsifiant de la composition insecticide.

25. Composition suivant la revendication 24, dans laquelle l'agent gélifiant est capable de former un mélange ternaire homogène avec le solvant et l'émulsifiant.

26. Composition suivant l'une quelconque des revendications 18 à 25, qui est sous forme d'une émulsion dans laquelle le diamètre moyen des gouttelettes est inférieur à 10 micromètres.

27. Composition suivant la revendication 26, dans laquelle le diamètre moyen des gouttelettes est inférieur à 3 micromètres.

28. Composition suivant la revendication 26 ou 27, qui comprend comme émulsifiant un surfactant anionique, non ionique, cationique et/ou amphotère ayant un équilibre hydrophile-lipophile (HLB) compris dans les limites de 2 unités de la valeur de HLB du solvant.

29. Composition suivant l'une quelconque des revendications 18 à 28, qui comprend un antioxydant phénolique.

30. Composition suivant la revendication 29, dans laquelle l'antioxydant consiste en butylhydroxytoluène ou butylhydroxyanisole.

31. Composition suivant l'une quelconque des revendications 18 à 30, qui comprend un agent acide qui consiste en acide acétique, acide phosphorique, acide sulfurique ou acide chlorhydrique, ou un surfactant phosphonique.
